# EUROPÄISCHE PATENTSCHRIFT

(11) **EP 4 389 553 B1**
(45) Veröffentlichungstag und Bekanntmachung des Hinweises auf die Patenterteilung: **18.02.2026**
(21) Anmeldenummer: 23217395.5
(22) Anmeldetag: 18.12.2023
(51) Int. Cl.: B61B 12/00, B61B 12/02

(54) **UMLAUFSEILBAHN UND VERFAHREN ZUM BETREIBEN EINER UMLAUFSEILBAHN**
CABLEWAY AND METHOD FOR OPERATING A CABLEWAY
TÉLÉPHÉRIQUE ET PROCÉDÉ DE FONCTIONNEMENT D'UN TÉLÉPHÉRIQUE

(30) Priorität: 22.12.2022 AT 509922022
(43) Veröffentlichungstag der Anmeldung: 26.06.2024
(73) Patentinhaber: Innova Patent GmbH, 6922 Wolfurt (AT)
(72) Erfinder: Mohr, Clemens, 6922 Wolfurt (AT)
(74) Vertreter: Patentanwälte Pinter & Weiss OG

(56) Entgegenhaltungen:
- EP-A1- 0 430 091
- EP-A2- 0 990 571
- DE-A1- 10 134 180
- FR-A1- 2 752 804

## Beschreibung

Die Erfindung betrifft eine Umlaufseilbahn mit einer Anzahl von Seilbahnstationen und einer Anzahl von Seilbahnfahrzeugen, die mit einem Förderseil zwischen den Seilbahnstationen bewegbar sind, wobei in einer ersten Seilbahnstation ein Einstiegsbereich für Passagiere zum Einsteigen in die Seilbahnfahrzeuge vorgesehen ist und wobei eine Steuerungseinheit zur Steuerung der Umlaufseilbahn vorgesehen ist und wobei in der ersten Seilbahnstation eine Detektionseinrichtung vorgesehen ist, die dazu ausgebildet ist, im Einstiegsbereich befindliche Passagiere zu detektieren und für jeden der detektierten Passagiere einen Passagiertyp zu ermitteln und dass die Steuerungseinheit dazu ausgebildet ist, die Umlaufseilbahn in einem festgelegten Sicherheitsbetriebsmodus zu betreiben, wenn zumindest ein ermittelter Passagiertyp ein festgelegter Sicherheitspassagiertyp ist.

Bei Umlaufseilbahnen werden die Seilbahnfahrzeuge in bekannter Weise in einer umlaufenden Schleife zwischen zwei Endstationen bewegt. Man unterscheidet im Wesentlichen zwischen Sesselbahnen, bei welchen die Seilbahnfahrzeuge jeweils einen Sessel zur Aufnahme von Passagieren aufweisen, und Kabinenbahnen, bei welchen die Seilbahnfahrzeuge jeweils eine Kabine zur Aufnahme von Passagieren aufweisen. Daneben sind auch Seilbahnen, sogenannte Kombi-Bahnen, bekannt, die einen Mischbetrieb mit Kabinenfahrzeugen und Sesselfahrzeugen ermöglichen. Bei modernen Umlaufseilbahnen werden die Seilbahnfahrzeuge bei der Einfahrt in eine Seilbahnstation vom Förderseil entkoppelt, abgebremst und mit verringerter Geschwindigkeit durch die Seilbahnstation bewegt. Bei der Ausfahrt werden die Seilbahnfahrzeuge wieder auf die Geschwindigkeit des Förderseils beschleunigt und mit dem Förderseil gekoppelt. Es sind aber auch Sesselbahnen bekannt, bei welchen die Sesselfahrzeuge fest mit dem Förderseil verbunden sind.

Früher wurden Umlaufseilbahnen hauptsächlich für den reinen Personentransport in Skigebieten verwendet. Dabei wurden überwiegend Skifahrer mit Skiausrüstung zwischen einer Talstation und einer Bergstation transportiert. Später kamen auch Snowboardfahrer mit Snowboards hinzu. Bei kleineren Kabinen werden die Skier und Snowboards meist in dafür vorgesehenen standardisierten Transportkörben transportiert, die an der Außenseite der Kabinen angeordnet sind. Bei größeren Kabinen wird die gesamte Ausrüstung meist innerhalb der Kabinen transportiert. Bei Sesselbahnen hingegen bleiben Ski oder Snowboard in der Regel während des Einstiegs und Ausstiegs an den Beinen angeschnallt und können während der Fahrt auf geeigneten Fußrasten abgestellt werden. Neben Ski und Snowboard gibt es in den letzten Jahren aber auch noch weitere, eher sperrige, Wintersportgeräte, z.B. Snowbikes oder Schlitten, zum Einsatz, die in der Regel innerhalb der Kabine oder in geeigneter Weise am Sessel befestigt, transportiert werden müssen.

Zunehmend werden die Umlaufseilbahnen in den Skigebieten aber auch im Sommer verwendet. Hierbei werden von den Passagieren beispielsweise Kinderwägen, Rollstühle oder Mountainbikes transportiert, aufgrund ihrer Größe meist ebenfalls innerhalb der Kabinen oder ggf. auf geeigneten Halteeinrichtungen der Sesselfahrzeuge. In letzter Zeit kommen Umlaufseilbahnen zudem auch öfter als öffentliches Verkehrsmittel im urbanen Raum zum Einsatz. Auch hier werden von den Passagieren häufig Objekte transportiert, wobei die Bandbreite an verschiedenen Objekttypen in der Regel größer ist, als in den Skigebieten. Insbesondere im urbanen Bereich werden neben den bereits genannten Objekten häufig Gepäckstücke, z.B. Koffer oder Taschen, oder Waren transportiert.

Es ist als ersichtlich, dass es eine große Bandbreite an Passagiertypen gibt, was dazu führt, dass sich beim Einsteigen und Aussteigen in die Seilbahnfahrzeuge unterschiedliche Herausforderungen ergeben. Während z.B. der Einstieg für einen Passagier des Passagiertyps "Skifahrer mit Skiausrüstung" relativ einfach und rasch bewältigt werden kann, kann der Einstieg von Passagieren mit unhandlichen Objekten (z.B. Passagiertyp "Person mit Gepäckstück", "Person mit Rollstuhl", "Person mit Fahrrad", "Person mit Kinderwagen", usw.) unter Umständen aufwändiger sein und daher mehr Zeit in Anspruch nehmen. Auch unterschiedliche körperliche Voraussetzungen der Passagiere können eine Rolle spielen. Beispielsweise haben Kinder, kleinere Erwachsene, ältere Menschen oder Menschen mit Beeinträchtigungen aufgrund der Geschwindigkeit der Seilbahnfahrzeuge und/oder aufgrund der Einstiegshöhe oftmals Probleme beim Einstieg in ein Seilbahnfahrzeug, insbesondere in Sesselfahrzeuge.

Bei herkömmlichen Umlaufseilbahnen werden die Seilbahnfahrzeuge im normalen Betriebsmodus üblicherweise mit einer festgelegten konstanten Fördergeschwindigkeit durch die Seilbahnstation bewegt. Bei kuppelbaren Seilbahnen ist die Fördergeschwindigkeit der entkoppelten Seilbahnfahrzeuge in der Regel zwar geringer, als die Geschwindigkeit des Förderseils, jedoch meist gleichbleibend. Bei nicht kuppelbaren Sesselbahnen entspricht die Fördergeschwindigkeit der Seilbahnfahrzeuge der Geschwindigkeit des Förderseils. Eine Veränderung der Fördergeschwindigkeit erfolgte bisher allenfalls durch einen manuellen Eingriff des Bedienpersonals. Kabinenbahnen sind in der Regel immer als kuppelbare Seilbahn ausgeführt. Das Öffnen und Schließen der Kabinentüren erfolgt hierbei üblicherweise automatisch an festgelegten Positionen innerhalb der Seilbahnstationen. Position, Zeitpunkt und verfügbare Zeit zum für den Einstieg bzw. Ausstieg sind daher fest vorgegeben und im Normalbetriebsmodus unveränderlich.

Für bestimmte Passagiertypen bleibt jedoch unter Umständen zu wenig Zeit für den Einstieg oder Ausstieg. Eine Berücksichtigung von individuellen Bedürfnissen der Passagiere ist bei herkömmlichen Umlaufseilbahnen daher in der Regel nicht möglich oder kann allenfalls durch einen manuellen Eingriff des Bedienpersonals erfolgen, indem die Seilbahn z.B. gestoppt wird oder die Fördergeschwindigkeit reduziert wird. Da der Trend zukünftig aber vermehrt in Richtung bedienerloser Betrieb geht, ist ein manueller Eingriff keine zufriedenstellende Lösung mehr. Zudem kann eine zuverlässige Erkennung von Passagiertypen, die ggf. mehr Zeit für den Einstieg bzw. Ausstieg benötigen, durch das Bedienpersonal aufgrund von Ablenkung oder anderweitigen Tätigkeiten nicht immer garantiert werden.

EP 3 888 993 A1 offenbart eine Zugangskontrollsteuerung einer Seilbahn in Abhängigkeit der Körpergröße der Passagiere und einen Betrieb der Seilbahn, wenn Kinder aufgrund der geringeren Körpergröße erkannt werden. Eine Schranke im Einstiegsbereich der Seilbahn wird nur dann geöffnet, wenn gleichzeitig auch ein Erwachsener anwesend ist und durch die Schranke gehen möchte. Damit kann ein vom Passagiertyp abhängiger Sicherheitsbetriebsmodus der Seilbahn realisiert werden. Der Einstieg der Passagiere in das Seilbahnfahrzeug selbst kann damit aber nicht beeinflusst oder verbessert werden. In DE 101 34 180 A1 wird eine Höhenanpassung einer Einstiegsplattform in Abhängigkeit der Körpergröße einsteigender Liftbenutzer offenbart.

Es ist daher eine Aufgabe der Erfindung, eine Umlaufseilbahn sowie ein Verfahren zum Betreiben einer Umlaufseilbahn bereitzustellen, die es ermöglicht, individuelle Bedürfnisse von Passagieren beim Einstieg zu berücksichtigen.

Die Aufgabe wird mit der eingangs genannten Seilbahn dadurch gelöst, dass zuerst ein Sicherheitspassagiertyp mit einer Detektionseinrichtung wie eingangs beschrieben ermittelt wird. Dadurch kann automatisch ermittelt werden, ob sich ein Sicherheitspassagiertyp im Einstiegsbereich befindet, der besondere Bedürfnisse, z.B. hinsichtlich der verfügbaren Einstiegszeit, hat und es kann automatisch darauf reagiert werden, indem eine geeignete Aktion ausgelöst wird, um den Bedürfnissen des Sicherheitspassagiertyps gerecht zu werden.

Im Einstiegsbereich kann eine Hubplattform für Passagiere mit einer Höhenverstelleinrichtung vorgesehen sein und die Steuerungseinheit kann dazu ausgebildet sein, die Höhenverstelleinrichtung im Sicherheitsbetriebsmodus anzusteuern, um die Hubplattform auf eine festgelegte oder festlegbare Höhe anzuheben. Dadurch kann dem Bedürfnis von kleinen Personen, z.B. Kindern, hinsichtlich einer geringeren Einstiegshöhe in das Seilbahnfahrzeug Rechnung getragen werden.

Im Einstiegsbereich ist erfindungsgemäß ein Förderband zur Förderung der Passagiere in einer Bewegungsrichtung der Seilbahnfahrzeuge vorgesehen, wobei das Förderband eine Förderband-Antriebseinheit zum Antrieb des Förderbandes aufweist und die Steuerungseinheit dazu ausgebildet ist, die Förderband-Antriebseinheit im Sicherheitsbetriebsmodus anzusteuern, um eine Förderbandgeschwindigkeit des Förderbands auf eine festgelegte oder festlegbare Förderbandgeschwindigkeit zu reduzieren.

Zusätzlich zum Förderband zur Förderung der Passagiere, ist eine Seilbahn-Antriebseinrichtung zum Antrieb der Seilbahnfahrzeuge vorgesehen und die Steuerungseinheit ist dazu ausgebildet, die Seilbahn-Antriebseinrichtung im Sicherheitsbetriebsmodus anzusteuern, um eine Fördergeschwindigkeit der Seilbahnfahrzeuge auf eine festgelegte oder festlegbare Fördergeschwindigkeit zu reduzieren. Dadurch kann der Einstieg für Passagiere erleichtert werden.

Es ist vorteilhaft, wenn die Seilbahn-Antriebseinrichtung eine Förderseil-Antriebseinheit zum Antrieb des Förderseils aufweist und/oder die Seilbahnfahrzeuge in der Seilbahnstation vom Förderseil entkoppelbar sind, wobei ein Hilfsantrieb zur Bewegung der entkoppelten Seilbahnfahrzeuge innerhalb der ersten Seilbahnstation vorgesehen ist und Seilbahn-Antriebseinrichtung eine Hilfsantriebseinheit für den Hilfsantrieb aufweist. Über die Förderseil-Antriebseinheit kann die Geschwindigkeit des Förderseils an einen Sicherheitspassagiertyp angepasst werden. Über die Förderseil-Antriebseinheit kann die Geschwindigkeit der vom Förderseil entkoppelten Seilbahnfahrzeuge in der Seilbahnstation an einen Sicherheitspassagiertyp angepasst werden.

Gemäß einer vorteilhaften Ausführungsform weist die Detektionseinrichtung zumindest eine Kamera zur Erfassung des Einstiegsbereichs auf und weist eine Auswerteeinheit auf, die dazu ausgebildet ist, aus einer Anzahl von, von der zumindest einen Kamera erfassten Bildern, die im Einstiegsbereich befindlichen Passagiere zu detektieren und für jeden detektierten Passagier den Passagiertyp zu ermitteln, Die zumindest eine Kamera kann beispielsweise eine herkömmliche Kamera, eine 3D-Kamera oder eine Infrarotkamera umfassen. In der Auswerteeinheit ist vorzugsweise ein Bilderkennungsmodell hinterlegt, beispielsweise ein künstliche-Intelligenz-Modell (Kl-Modell) wie z.B. ein künstliches neuronales Netz. Aus den Kamerabildern kann die Auswerteeinheit somit verschiedenste (Sicherheits-)Passagiertypen ermitteln. Das Bilderkennungsmodell kann beispielsweise mit einer Vielzahl von Bildern von Passagieren trainiert werden, deren Passagiertyp bekannt ist. Dadurch lernt das Bilderkennungsmodell, normale Passagiere (z.B. Erwachsene ohne körperliche Einschränkungen) von Sicherheitspassagiertypen zu unterscheiden. Das Bilderkennungsmodell kann ggf. auch während des Betriebs mit aktuellen Bilddaten trainiert werden, um die Zuverlässigkeit zu erhöhen oder um einen neuen Sicherheitspassagiertyp zu ergänzen.

Der ermittelbare Sicherheitspassagiertyp kann beispielsweise zumindest einen der folgenden Passagiertypen umfassen: Passagier unterhalb einer festgelegten Körpergröße, Passagier oberhalb einer festgelegten Körpergröße, Passagier mit Snowboard, Passagier mit Snowbike, Passagier mit Rollstuhl, Passagier mit Bob oder Schlitten, Passagier mit Monoski, Passagier mit Fahrrad, Passagier mit Gepäckstück, Passagier mit Kleinkind, Passagier mit Haustier, Passagier mit Rettungsausrüstung, insbesondere Akia, Passagier mit Gehhilfe. Die Aufzählung ist natürlich nicht abschließend und die ermittelbaren Sicherheitspassagiertypen können an eine bestimmte Seilbahnanlage angepasst werden. Beispielsweise ist die Erkennung eines Passagiers mit Snowboard bei einer Seilbahn im urbanen Raum in der Regel nicht erforderlich.

Vorzugsweise sind zumindest zwei verschiedene Sicherheitspassagiertypen festgelegt, wobei für einen ersten Sicherheitspassagiertyp ein erster Sicherheitsbetriebsmodus festgelegt ist und für einen zweiten Sicherheitspassagiertyp ein zweiter Sicherheitsbetriebsmodus festgelegt ist, der sich vom ersten Sicherheitsbetriebsmodus unterscheidet. Dadurch können bei verschiedenen Sicherheitspassagiertypen unterschiedliche Reaktionen durchgeführt werden. Beispielsweise kann für den ersten Sicherheitsbetriebsmodus eine erste Höhe der Hubplattform festgelegt sein und für den zweiten Sicherheitsbetriebsmodus eine von der ersten Höhe verschiedene zweite Höhe der Hubplattform festgelegt sein. Dadurch können verschiedene Körpergrößen berücksichtigt werden. Es kann auch für den ersten Sicherheitsbetriebsmodus eine erste Förderbandgeschwindigkeit des Förderbands festgelegt sein und für den zweiten Sicherheitsbetriebsmodus eine von der ersten Förderbandgeschwindigkeit verschiedene zweite Förderbandgeschwindigkeit des Förderbands festgelegt sein und/oder es kann für den ersten Sicherheitsbetriebsmodus eine erste Fördergeschwindigkeit der Seilbahnfahrzeuge festgelegt sein und für den zweiten Sicherheitsbetriebsmodus eine von der ersten Fördergeschwindigkeit verschiedene zweite Fördergeschwindigkeit der Seilbahnfahrzeuge festgelegt sein. Dadurch können beispielsweise verschiedene Relativgeschwindigkeiten zwischen Seilbahnfahrzeug und Förderband eingestellt werden. Die Umlaufseilbahn kann als Sesselbahn ausgebildet sein, wobei die Anzahl von Seilbahnfahrzeugen als Sesselfahrzeuge ausgebildet sind und wobei der Einstiegsbereich einen Sessel-Einstiegsbereich zum Einstieg in die Sesselfahrzeuge umfasst. Alternativ kann die Umlaufseilbahn auch als Kabinenbahn ausgebildet sein, wobei die Anzahl von Seilbahnfahrzeugen als Kabinenfahrzeuge ausgebildet sind und wobei der Einstiegsbereich einen Kabinen-Einstiegsbereich zum Einstieg in die Kabinenfahrzeuge umfasst. Alternativ könnte die Umlaufseilbahn auch als Kombi-Bahn ausgebildet sein, wobei die Anzahl von Seilbahnfahrzeugen eine Anzahl von Sesselfahrzeugen und eine Anzahl von Kabinenfahrzeugen umfasst, wobei der Einstiegsbereich einen Sessel-Einstiegsbereich zum Einstieg in die Sesselfahrzeuge und/oder einen Kabinen-Einstiegsbereich zum Einstieg in die Kabinenfahrzeuge umfasst. Die Erfindung kann somit sehr flexibel bei verschiedenen Typen von Umlaufseilbahnen angewendet werden.

Es kann auch ein Zugangsbereich für den Zugang der Passagiere zum Einstiegsbereich vorgesehen sein, wobei zwischen dem Zugangsbereich und dem Einstiegsbereich vorzugsweise eine automatische Schrankeneinrichtung vorgesehen ist, die dazu ausgebildet ist, den Zugang für die Passagiere zum Einstiegsbereich freizugeben und die Detektionseinrichtung kann dazu ausgebildet sein, die Passagiertypen im Bereich zwischen dem Zugangsbereich und dem Einstiegsbereich zu ermitteln, vorzugsweise im Bereich der Schrankeneinrichtung. Dadurch kann für die Passagiere im Zugangsbereich vorausschauend der geeignete Sicherheitsbetriebsmodus eingestellt werden.

In einer zweiten Seilbahnstation kann ein Ausstiegsbereich für Passagiere zum Aussteigen aus den Seilbahnfahrzeugen vorgesehen sein und die Steuerungseinheit kann dazu ausgebildet sein, die Umlaufseilbahn zu einem Ausstiegszeitpunkt erneut in einem festgelegten Sicherheitsbetriebsmodus zu betreiben, zu dem sich ein Seilbahnfahrzeug mit einem Passagier, für den in der ersten Seilbahnstation ein Sicherheitspassagiertyp ermittelt wurde, im Ausstiegsbereich befindet. Der Sicherheitsbetriebsmodus kann dabei beispielsweise eine Reduktion der Fördergeschwindigkeit der Seilbahnfahrzeuge umfassen, sodass der Ausstieg erleichtert wird. Der Ausstiegszeitpunkt kann beispielsweise über die Laufzeit des Seilbahnfahrzeugs zwischen den Seilbahnstationen ermittelt werden. Die Laufzeit kann als bekannt vorausgesetzt werden.

Es kann auch vorteilhaft sein, wenn jedes Seilbahnfahrzeug eine eindeutige Fahrzeugkennung aufweist und die Steuerungseinheit dazu ausgebildet ist, den Ausstiegszeitpunkt anhand der Fahrzeugkennung zu ermitteln. Die Fahrzeugkennung kann z.B. eine charakteristische optische Marke an den Seilbahnfahrzeugen sein, die von der Detektionseinrichtung detektiert werden kann, z.B. ein QR-Code, eine Nummer, o.ä. Es könnte auch eine separate erste Leseeinrichtung zum Auslesen der Fahrzeugkennung in der ersten Seilbahnstation vorgesehen sein, die mit der Steuerungseinheit der Seilbahn kommuniziert. Wenn als Fahrzeugkennung z.B. ein Strichcode vorgesehen ist, dann könnte die erste Leseeinrichtung einen Strichcode-Leser zum Auslesen des Strichcodes umfassen. Die Fahrzeugkennung könnte auch über Nahfeldkommunikation (NFC) oder "radio-frequency identification" (RFID) erfolgen. Dazu kann an den Seilbahnfahrzeugen jeweils ein, vorzugsweise passiver, Transponder angeordnet sein und die erste Leseeinrichtung könnte ein geeignetes NFC- bzw. RFID-Lesegerät zum Auslesen der Fahrzeugkennung umfassen. In der zweiten Seilbahnstation kann in analoger Weise eine zweite Leseeinrichtung zum Auslesen der Fahrzeugkennung vorgesehen sein, die mit der Steuerungseinheit der Seilbahn kommuniziert. Die zweite Leseeinrichtung kann ggf. auch so ausgebildet sein wie die Detektionseinrichtung und z.B. zumindest eine Kamera und eine Auswerteeinheit umfassen.

Die Aufgabe wird weiters mit dem eingangs genannten Verfahren dadurch gelöst, dass mit einer Detektionseinrichtung im Einstiegsbereich befindliche Passagiere detektiert werden und für jeden der detektierten Passagiere ein Passagiertyp ermittelt wird und dass die Steuerungseinheit die Umlaufseilbahn in einem festgelegten Sicherheitsbetriebsmodus betreibt, wenn zumindest ein ermittelter Passagiertyp ein festgelegter Sicherheitspassagiertyp ist.

Vorteilhafte Ausführungsformen des Verfahrens sind in den Ansprüchen 10 bis 16 angegeben.

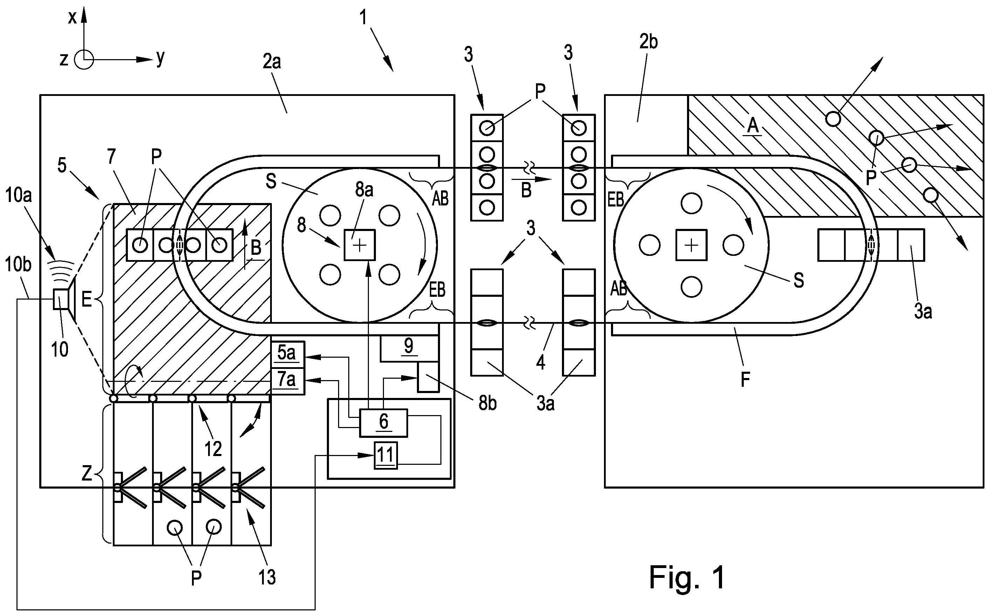

Die gegenständliche Erfindung wird nachfolgend unter Bezugnahme auf die Figur 1 näher erläutert, die beispielhaft, schematisch und nicht einschränkend eine vorteilhafte Ausgestaltung der Erfindung zeigt. Dabei zeigt
- Fig.1: eine Umlaufseilbahn in Form einer Sesselbahn in einer Ansicht von oben.

In Fig.1 ist eine Umlaufseilbahn 1 mit zwei Seilbahnstationen 2a, 2b dargestellt. Nachfolgend wird der Begriff Seilbahn synonym für Umlaufseilbahn verwendet. Die Seilbahn 1 weist eine Anzahl von Seilbahnfahrzeugen 3 auf, die mit einem Förderseil 4 zwischen den Seilbahnstationen 2a, 2b bewegbar sind. Die erste Seilbahnstation 2a und die zweite Seilbahnstation 2b sind als Endstationen ausgebildet, in denen das Förderseil 4 jeweils um eine Seilscheibe S umgelenkt ist, um eine geschlossene Seilschleife auszubilden. Die Seilbahnfahrzeuge 4 können in einer umlaufenden Bewegung entlang dieser Seilschleife bewegt werden. Optional können in bekannter Weise auch eine oder mehrere (nicht dargestellte) Seilbahnstationen, sogenannte Mittelstationen, zwischen den Endstationen 2a, 2b vorgesehen sein, in denen im Gegensatz zu den Endstationen kein Wenden der Seilbahnfahrzeuge 3 erfolgt.

Die erste Seilbahnstation 2a kann beispielsweise eine Talstation in einem Tal eines Skigebiets sein und die zweite Seilbahnstation 2b kann eine Bergstation auf einem Berg des Skigebiets sein. Im Betrieb der Seilbahn 1 erfolgt der Transport von Passagieren P daher überwiegend von der Talstation 2a zur Bergstation 2b. Natürlich ist aber auch ein Transport vom Berg ins Tal möglich. Natürlich ist die Verwendung in einem Skigebiet nur beispielhaft und die Seilbahn 1 könnte alternativ beispielsweise auch für den urbanen Betrieb vorgesehen sein. In diesem Fall muss nicht zwingend ein Höhenunterschied überbrückt werden, sondern es könnte auch eine Bewegung in der Ebene oder mit nur geringem Höhenunterschied oder eine Überbrückung eines Flusses, usw. erfolgen. Der Passagiertransport kann hierbei auch zu im Wesentlichen gleichen Teilen in beiden Richtungen erfolgen.

In der Seilbahn 1 ist weiters eine Seilbahn-Antriebseinrichtung 8 zum Antrieb der Seilbahnfahrzeuge 3 vorgesehen. Die Seilbahn-Antriebseinrichtung 8 weist eine Förderseil-Antriebseinheit 8a, z.B. eine geeignete elektrische Maschine, zum Antrieb des Förderseils 4 auf. Die Förderseil-Antriebseinheit 8a kann beispielsweise in einer der Seilbahnstationen 2a, 2b angeordnet sein und zum Antrieb der jeweiligen Seilscheibe S ausgebildet sein. In der dargestellten Ausführungsform gemäß Fig.1 ist beispielhaft eine Förderseil-Antriebseinheit 8a in der ersten Seilbahnstation 2a vorgesehen. Ggf. können aber auch in den anderen verfügbaren Seilbahnstationen 2b weitere Förderseil-Antriebseinheiten 8a vorgesehen sein, um die jeweilige Seilscheibe S anzutreiben. Dies kann z.B. vorteilhaft sein, um eine Redundanz des Antriebs zu ermöglichen oder bei besonders großen Seillängen und/oder besonders großen Lasten und/oder großen Steigungen.

Die dargestellte Seilbahn 1 ist als Sesselbahn ausgebildet, bei der die Seilbahnfahrzeuge 3 als Sesselfahrzeuge 3a ausgebildet sind. Jedes Sesselfahrzeug 3a weist einen Sessel zur Aufnahme einer Anzahl von Passagieren P auf, z.B. vier Passagiere, wie in Fig.1 angedeutet ist. Alternativ könnte die Seilbahn 1 aber auch als Kabinenbahn ausgebildet sein, bei der die Seilbahnfahrzeuge 3 als Kabinenfahrzeuge ausgebildet sind (nicht dargestellt). Jedes Kabinenfahrzeug weist dabei eine Kabine zur Aufnahme einer Mehrzahl von Passagieren P auf, beispielsweise sechs Passagiere oder mehr. In den Seilbahnstationen ist in diesem Fall ein Bahnsteig vorgesehen, entlang dem die Kabinenfahrzeuge bewegt werden und über den die Passagiere in die Kabinen ein- bzw. aussteigen können. Auch eine Ausführung als Kombi-Bahn wäre im Rahmen der Erfindung möglich. Eine Kombi-Bahn ist eine Kombination aus Sesselbahn und Kabinenbahn, wobei abwechselnd eine Anzahl von Sesselfahrzeugen und eine Anzahl von Kabinenfahrzeugen hintereinander am Förderseil bewegt werden. Hierbei ist in den Seilbahnstationen in der Regel jeweils ein Einstiegsbereiche für die Sesselfahrzeuge und ein davon getrennter Einstiegsbereich für die Kabinenfahrzeuge vorgesehen. Kabinenbahnen und Kombi-Bahnen sind im Stand der Technik bekannt, weshalb an dieser Stelle keine detaillierte Beschreibung mehr erfolgt. Der Einfachheit halber wird die Erfindung anhand der dargestellten Sesselbahn beschrieben.

Die Seilbahn 1 ist als sogenannte kuppelbare Seilbahn ausgebildet, bei der die Seilbahnfahrzeuge 3 in bekannter Weise lösbar mit dem Förderseil 4 koppelbar sind. An den Seilbahnfahrzeugen 3 sind dazu (nicht dargestellte) öffen- und schließbare Seilklemmen vorgesehen. Während der Fahrt auf der freien Strecke zwischen den Seilbahnstationen 2a, 2b ist die Seilklemme eines Seilbahnfahrzeugs 3 geschlossen, sodass das Seilbahnfahrzeug 3 kraftschlüssig mit dem Förderseil 4 gekoppelt ist. Die von der Förderseil-Antriebseinheit 8a erzeugte Antriebskraft wird dabei kraftschlüssig über die Seilklemme vom Förderseil 4 auf das Seilbahnfahrzeug 3 übertragen. Bei der Einfahrt in eine Seilbahnstation 2a, 2b kann die Seilklemme eines Seilbahnfahrzeugs 3 durch eine (nicht dargestellte) Betätigungseinrichtung geöffnet werden, um das Seilbahnfahrzeug 3 vom Förderseil 4 zu entkoppeln. Während das Förderseil 4 im Normalbetrieb mit einer im Wesentlichen unveränderten und konstanten Fördergeschwindigkeit um die Seilscheibe S weiterbewegt wird, kann das im Einfahrtsbereich EB entkoppelte Seilbahnfahrzeug 3 nach dem Entkoppeln abgebremst und mit verringerter Geschwindigkeit vom Einfahrtsbereich EB zu einem Ausfahrtsbereich AB der jeweiligen Seilbahnstation 2a, 2b bewegt werden. Dadurch kann der Einstieg erleichtert werden und trotzdem eine hohe Förderkapazität ermöglicht werden.

Zur Führung der, vom Förderseil 4 entkoppelten, Seilbahnfahrzeuge 3 ist in den Seilbahnstationen 2a, 2b jeweils eine ortsfeste Führungsschienen F vorgesehen. Die Führungsschienen F erstrecken sich jeweils vom Einfahrtsbereich EB bis zum Ausfahrtsbereich AB einer Seilbahnstation 2a, 2b. Im Ausfahrtsbereich AB können die Seilbahnfahrzeuge 3 zunächst wieder auf die Fördergeschwindigkeit des Förderseils 4 beschleunigt werden und es können die Seilklemmen der Seilbahnfahrzeuge 3 durch eine (nicht dargestellte) Betätigungseinrichtung betätigt werden, um das Seilbahnfahrzeug 3 wieder mit dem Förderseil 4 zu koppeln. An den Seilbahnfahrzeugen 3 können jeweils eine Anzahl von (nicht dargestellten) Führungsrollen vorgesehen sein, mit denen die Seilbahnfahrzeuge 3 im vom Förderseil 4 entkoppelten Zustand entlang der Führungsschienen F geführt werden können.

Zum Antrieb der entkoppelten Seilbahnfahrzeuge 3 entlang der Führungsschienen F kann in den Seilbahnstationen 2a, 2b je Führungsschiene F ein Hilfsantrieb 9 vorgesehen sein. Der Hilfsantrieb 9 ist in Fig.1 lediglich schematisch angedeutet und kann beispielsweise in Form eines bekannten Reifenförderers ausgebildet sein, der eine Mehrzahl von angetriebenen Reifen aufweist, die hintereinander entlang der jeweiligen Führungsschiene F angeordnet sind. Die Reifen können mit Reibbelägen an den Seilbahnfahrzeugen 3 zum Antrieb der Seilbahnfahrzeuge 3 zusammenwirken. Auch ein Kettenförderer oder Zahnriemenförderer wäre denkbar. Zum Antrieb der Hilfsantriebe 9 kann jeweils eine geeignete Hilfsantriebseinheit 8b, z.B. eine elektrische Maschine, vorgesehen sein. Die Hilfsantriebseinheit 8b ist lediglich beispielhaft für den Hilfsantrieb 9 der ersten Seilbahnstation 2a angedeutet. Natürlich ist vorzugsweise auch in der zweiten Seilbahnstation 2b in analoger Weise ein Hilfsantrieb 9 mit einer Hilfsantriebseinheit 8b vorgesehen.

In der Seilbahn 1 ist weiters zumindest eine Steuerungseinheit 6 zur Steuerung von Funktionen der Seilbahn 1 vorgesehen. Die Steuerungseinheit 6 dient unter anderem zur Steuerung der Antriebseinrichtung 8, insbesondere zur Steuerung der verfügbaren Förderseil-Antriebseinheit(en) 8a und zur Steuerung der verfügbaren Hilfsantriebseinheit(en) 8b. Zusätzlich könnte die Steuerungseinheit 6 natürlich auch zur Steuerung weiterer Funktionen ausgebildet sein, die jedoch für die Erfindung nicht relevant sind, z.B. zur Beleuchtungssteuerung, usw. Die Position der Steuerungseinheit 6 ist in Fig.1 lediglich beispielhaft in der ersten Seilbahnstation 2a dargestellt und kann z.B. in einem Bedienraum für das Seilbahnpersonal angeordnet sein. Die Steuerungseinheit 6 kann natürlich auch in der zweiten Seilbahnstation 2b angeordnet sein oder an einer beliebig anderen geeigneten Stelle der Seilbahn 1. Die Steuerungseinheit 6 könnte beispielsweise auch mehrere separate Steuerungseinheiten aufweisen, die über eine geeignete Kommunikationsverbindung miteinander kommunizieren. Die Steuerungseinheit 6 kann eine geeignete Hardware und/oder Software aufweisen.

In der ersten Seilbahnstation 2a ist ein Einstiegsbereich E für Passagiere P zum Einsteigen in die Seilbahnfahrzeuge 3, hier die Sesselfahrzeuge 3a, vorgesehen. Position und Größe des Einstiegsbereichs E richten sich nach der Kapazität der Sesselfahrzeuge 3a und der konkreten Ausführung und Anordnung der Seilbahnstation 2a. Im dargestellten Beispiel befindet sich der Einstiegsbereich E beispielhaft unterhalb des gekrümmten Abschnitts der Führungsschiene F. Die Seilbahnfahrzeuge 3 werden somit entlang einer Kurve durch den Einstiegsbereich E bewegt. Natürlich könnte sich der Einstiegsbereich E aber beispielsweise auch unterhalb des geraden Abschnitts der Führungsschiene F, vor dem Ausfahrtsbereich AB, befinden, sodass die Seilbahnfahrzeuge 3 entlang einer Geraden durch den Einstiegsbereich E bewegt werden.

Weiters ist im Beispiel gemäß Fig.1 zudem ein Zugangsbereich Z für den Zugang der Passagiere P zum Einstiegsbereich E vorgesehen, der an den Einstiegsbereich E angrenzt. Zwischen dem Zugangsbereich Z und dem Einstiegsbereich E kann eine automatische Schrankeneinrichtung 12 vorgesehen sein, die dazu ausgebildet ist, den Zugang für die Passagiere P zum Einstiegsbereich E zyklisch freizugeben bzw. zu versperren. Dadurch kann gewährleistet werden, dass jeweils nur die, der Anzahl von Sitzplätzen entsprechende Anzahl an Passagieren P in den Einstiegsbereich E gelangen. Die automatische Schrankeneinrichtung 12 kann von der Steuerungseinheit 6 angesteuert werden, um die automatische Schrankeneinrichtung 12 jeweils zum richtigen Zeitpunkt zu öffnen und zu schließen. Der Zeitpunkt des Öffnens/Schließens hängt vom Abstand zwischen den Seilbahnfahrzeugen 3 und der Fördergeschwindigkeit der Seilbahnfahrzeuge 3 ab und kann als bekannt vorausgesetzt werden. Wie in Fig.1 angedeutet ist, kann im Zugangsbereich Z in bekannter Weise kann auch eine Kontrolleinrichtung 13 vorgesehen sein, die dazu ausgebildet ist, eine Kontrolle einer Fahrerlaubnis der Passagiere P durchzuführen. Die Kontrolleinrichtung 13 kann beispielsweise ein Drehkreuz aufweisen, das den Durchgang nur bei gültiger Fahrerlaubnis freigibt und andernfalls versperrt. Die Kontrolle der Fahrerlaubnis erfolgt vorzugsweise kontaktlos, beispielsweise über NFC oder RFID.

Gemäß der Erfindung ist in der ersten Seilbahnstation 2a eine Detektionseinrichtung vorgesehen, die dazu ausgebildet ist, im Einstiegsbereich E befindliche Passagiere P zu detektieren und für jeden der detektierten Passagiere P einen Passagiertyp zu ermitteln. Zudem ist die Steuerungseinheit 6 dazu ausgebildet, die Umlaufseilbahn 1 in einem festgelegten Sicherheitsbetriebsmodus zu betreiben, wenn zumindest ein ermittelter Passagiertyp ein festgelegter Sicherheitspassagiertyp ist. Im Rahmen der Erfindung kann der ermittelbare Sicherheitspassagiertyp beispielsweise zumindest einen der folgenden Passagiertypen umfassen: "Passagier unterhalb einer festgelegten Körpergröße", "Passagier oberhalb einer festgelegten Körpergröße", "Passagier mit Snowboard", "Passagier mit Snowbike", "Passagier mit Rollstuhl", "Passagier mit Bob oder Schlitten", "Passagier mit Monoski", "Passagier mit Fahrrad", "Passagier mit Gepäckstück", "Passagier mit Kleinkind", "Passagier mit Haustier", "Passagier mit Rettungsausrüstung, insbesondere Akia", "Passagier mit Gehhilfe". Die Liste ist natürlich nur beispielhaft und nicht abschließend zu verstehen. Es können weitere geeignete Sicherheitspassagiertypen ergänzt werden, sofern diese von der Detektionseinrichtung detektierbar sind.

Im dargestellten Beispiel weist die Detektionseinrichtung zumindest eine Kamera 10 zur Erfassung des Einstiegsbereichs E auf sowie eine Auswerteeinheit 11, die dazu ausgebildet ist, aus einer Anzahl von, von der zumindest einen Kamera 10 erfassten Bildern, die im Einstiegsbereich E befindlichen Passagiere P zu detektieren und für jeden detektierten Passagier den Passagiertyp zu ermitteln. In einer einfachen Ausführungsform kann die zumindest eine Kamera 10 eine handelsübliche Digitalkamera (Foto und/oder Videokamera) aufweisen. Die zumindest eine Kamera 10 kann eine zeitliche Sequenz von Bildern des Einstiegsbereichs E aufnehmen. Alternativ oder zusätzlich könnte zumindest eine Kamera 10 auch eine 3D-Kamera oder eine Infrarotkamera umfassen. Aufgrund der räumlichen Darstellung durch eine 3D-Kamera können die Passagiertypen besser erkannt werden. Eine Infrarotkamera kann bei schlechter Sicht oder schlechten Lichtverhältnissen vorteilhaft sein.

Die zumindest eine Kamera 10 ist vorzugsweise an einer geeigneten Stelle in der ersten Seilbahnstation 2a montiert, sodass zumindest der Einstiegsbereich E möglichst störungsfrei und möglichst frei von Witterungseinflüssen erfasst werden kann. Die Kamera 10 kann beispielsweise in einem oberen Bereich der Seilbahnstation 2a an einer ortsfesten Struktur montiert sein. Die Position der Kamera 10 relativ zum Einstiegsbereich E ist dabei vorzugsweise so gewählt, dass eine möglichst gute Erfassung der Passagiere P möglich ist. Beispielsweise kann die Kamera 10 so angeordnet sein, dass eine Bildachse der Kamera 10 im Wesentlichen normal auf den Einstiegsbereich E steht. Um die Passagiere P von aus verschiedenen Perspektiven zu erfassen kann es vorteilhaft sein, wenn mehrere Kameras 10 verwendet werden, die an verschiedenen Positionen angeordnet sind, z.B. eine Kamera 10 zur Aufnahme der Passagiere P von vorne und/oder von der Seite.

Die zumindest eine Kamera 10 kann über eine geeignete drahtlose Kommunikationsverbindung 10a, z.B. über Funk oder Bluetooth, und/oder über eine drahtgebundene Kommunikationsverbindung 10b, beispielsweise über eine elektrische Leitung, mit der Auswerteeinheit 11 verbunden sein. Die Auswerteeinheit 11 ist im dargestellten Beispiel in der Steuerungseinheit 6 integriert, wie durch den Rahmen in Fig.1 symbolisiert ist. Die Auswerteeinheit 11 kann eine geeignete Hardware und/oder Software aufweisen. Alternativ könnte die Auswerteeinheit 11 aber auch als separate Einheit ausgebildet sein, die zwischen der zumindest einen Kamera 10 und der Steuerungseinheit 6 angeordnet ist. Die Auswerteeinheit 11 könnte aber beispielsweise auch in der Kamera 10 integriert sein, was beispielsweise bei der Verwendung von sogenannten bekannten "Smart-Kameras" der Fall ist, die beispielsweise in der industriellen Bildverarbeitung eingesetzt werden. In diesem Fall könnte die Einheit bestehend aus Kamera 10 und Auswerteeinheit 11 über die Kommunikationsverbindung 10, 10b mit der Steuerungseinheit 6 verbunden sein.

Zur Ermittlung der (Sicherheits-)Passagiertypen aus den Bilddaten der Kamera 10, ist es vorteilhaft, wenn in der Auswerteeinheit 11 ein Bilderkennungsmodell hinterlegt ist. Als Bilderkennungsmodell kann z.B. ein geeigneter Algorithmus in Form einer künstlichen Intelligenz (Kl-Modell) verwendet werden. Ein solcher Algorithmus kann z.B. ein künstliches neuronales Netz sein, das maschinelles Lernen ermöglicht. Das KI-Modell kann dabei zunächst mit einer Vielzahl an Bilddaten von Passagieren trainiert werden, deren Passagiertyp bekannt ist. Durch entsprechendes Training mit Bildern von bekannten Passagiertypen lernt das Kl-Modell, selbstständig unkritische Passagiertypen (für die kein Sicherheitsbetriebsmodus ausgelöst werden soll) von Sicherheitspassagiertypen (für die ein Sicherheitsbetriebsmodus ausgelöst werden soll) zu unterscheiden. Solche Bilderkennungsmodelle sind im Stand der Technik bekannt, weshalb an dieser Stelle keine detaillierte Beschreibung mehr erfolgt. Für die Verwendung im Rahmen der Erfindung kann der Fachmann ein geeignetes Bilderkennungsmodell auswählen. Daten für das Training können beispielsweise durch vorherige Aufnahme an vergleichbaren Seilbahnen erzeugt werden.

Nachfolgend werden einige vorteilhafte Ausführungsformen des erfindungsgemäßen Sicherheitsbetriebsmodus beschrieben, die von der Steuerungseinheit 6 bei Detektion zumindest eines Sicherheitspassagiertyps durchgeführt werden können. Die Ausführungsformen sind aber natürlich nur beispielhaft und nicht einschränkend zu verstehen. Die beschriebenen nachfolgend beschriebenen Ausführungsformen können im Rahmen der Erfindung einzeln oder in Kombination verwendet werden.

Gemäß einer ersten vorteilhaften Ausführungsform ist die Steuerungseinheit 6 dazu ausgebildet, die Seilbahn-Antriebseinrichtung 8 (Förderseil-Antriebseinheit 8a und/oder Hilfsantriebseinheit 8b) im Sicherheitsbetriebsmodus so anzusteuern, dass eine Fördergeschwindigkeit der Seilbahnfahrzeuge 3 (oder zumindest des sich im Einstiegsbereich E befindlichen Seilbahnfahrzeugs 3) auf eine festgelegte oder festlegbare Fördergeschwindigkeit reduziert wird. Dadurch hat der Passagier P im Einstiegsbereich E, für den von der Detektionseinrichtung ein Sicherheitspassagiertyp detektiert wurde, gegenüber dem Normalbetrieb mehr Zeit für den Einstieg in das Seilbahnfahrzeug 3. Dasselbe gilt natürlich auch für die anderen Passagiere P, die sich gleichzeitig mit dem detektierten Sicherheitspassagiertyp im Einstiegsbereich E befinden. Dadurch kann die Sicherheit für Passagiere P mit besonderen Bedürfnissen hinsichtlich der Einstiegsdauer erhöht werden.

Nach Ablauf einer bestimmten Zeit kann die Steuerungseinheit 6 dann beispielsweise wieder vom Sicherheitsbetriebsmodus in den Normalbetriebsmodus schalten, in welchem die Fördergeschwindigkeit wieder auf die festgelegte Standard-Geschwindigkeit erhöht wird. Alternativ könnte aber z.B. auch über die Detektionseinrichtung erkannt werden, ob und wann der Einstieg durch die im Einstiegsbereich E anwesenden Passagiere P beendet ist und die Steuerungseinheit 6 könnte diese Information verwenden, vom Sicherheitsbetriebsmodus wieder in den Normalbetriebsmodus zu schalten. Es könnte natürlich auch eine zusätzliche (nicht dargestellte) Sensoreinrichtung vorgesehen sein, um eine Position des Seilbahnfahrzeugs 3 in der Seilbahnstation 2a zu detektieren. Die Sensoreinrichtung kann über eine geeignete Sensorleitung mit der Steuerungseinheit 6 verbunden sein. Denkbar wäre z.B. ein optischer Sensor, wie z.B. eine Lichtschranke, der an einer geeigneten Position in der Seilbahnstation 2a, z.B. am Ende des Einstiegsbereichs E oder in Bewegungsrichtung B nach dem Einstiegsbereich E, angeordnet sein kann. Die Steuerungseinheit 6 könnte in Abhängigkeit des erhaltenen Sensorsignals vom Sicherheitsbetriebsmodus in den Normalbetriebsmodus schalten. Auch andere Sensoren, z.B. induktive oder kapazitive Näherungssensoren, elektrische Positionsschalter, o.ä. könnten als Sensoreinrichtung verwendet werden.

Gemäß einer weiteren vorteilhaften Ausführungsform kann im Einstiegsbereich E ein Förderband 7 zur Förderung der Passagiere P in der Bewegungsrichtung B der Seilbahnfahrzeuge 3 vorgesehen sein. Das Förderband 7 weist hierbei eine geeignete Förderband-Antriebseinheit 7a zum Antrieb des Förderbandes 7 auf, beispielsweise einen Elektromotor. Die Steuerungseinheit 6 ist in diesem Fall dazu ausgebildet, die Förderband-Antriebseinheit 7a im Sicherheitsbetriebsmodus so anzusteuern, dass eine Förderbandgeschwindigkeit des Förderbands 7 auf eine festgelegte oder festlegbare Förderbandgeschwindigkeit einstellbar ist. Solche Förderbänder 7 sind im Stand der Technik bekannt und werden hauptsächlich bei Sesselbahnen verwendet, bei welchen die Sesselfahrzeuge 3a fest mit dem Förderseil 4 verbunden sind. Die Sesselfahrzeuge 3a können somit im Einstiegsbereich E nicht vom Förderseil 4 entkoppelt werden, sodass im Gegensatz zur in Fig.1 dargestellten kuppelbaren Seilbahn 1 keine Geschwindigkeitsreduktion erfolgt. Die Sesselfahrzeuge 3a werden somit mit der Geschwindigkeit des Förderseils 4 durch den Einstiegsbereich E bewegt, was den Einstieg für die Passagiere P, die sich im Stillstand befinde, naturgemäß erschwert. Durch das Förderband 7 ist es jedoch möglich, dass die darauf befindlichen Passagiere P mit einer festgelegten oder einstellbaren Geschwindigkeit v > 0 in Bewegungsrichtung B bewegt werden, wodurch eine Relativgeschwindigkeit zwischen dem Seilbahnfahrzeug 3 und den Passagieren P verringert wird, was den Einstieg erheblich erleichtert, weil die Aufprallgeschwindigkeit verringert wird.

Im Sicherheitsbetriebsmodus könnte nun beispielsweise die Förderbandgeschwindigkeit (vorzugsweise kombiniert mit einer Reduktion der Fördergeschwindigkeit des Förderseils 4 bzw. der Sesselfahrzeuge 3a) gegenüber dem normalen Betrieb reduziert werden, sodass der Aufstieg für die Passagiere P, insbesondere für den detektierten Sicherheitspassagiertyp, auf das Förderband 7 erleichtert wird. Natürlich ist aber auch eine Kombination von kuppelbaren Seilbahnfahrzeugen 3, die innerhalb der Seilbahnstation 2a vom Förderseil 4 entkoppelbar und mit verringerter Geschwindigkeit durch den Einstiegsbereich E bewegbar sind, und einem Förderband 7 möglich. Hierbei könnten beispielsweise die Fördergeschwindigkeit der Seilbahnfahrzeuge 3 und die Förderbandgeschwindigkeit aufeinander abgestimmt werden, um den Einstieg zu erleichtern.

Gemäß einer weiteren vorteilhaften Ausführungsform kann im Einstiegsbereich E eine Hubplattform 5 für Passagiere P mit einer Höhenverstelleinrichtung 5a vorgesehen sein. Die Steuerungseinheit 6 ist hierbei dazu ausgebildet, die Höhenverstelleinrichtung 5a im Sicherheitsbetriebsmodus so anzusteuern, dass die Hubplattform 5 auf eine festgelegte oder festlegbare Höhe angehoben werden kann. Das kann insbesondere dann vorteilhaft sein, wenn als Sicherheitspassagiertyp ein Passagier P unter einer festgelegten Mindestgröße, beispielsweise ein Kind, detektiert wird. Die Hubplattform 5 kann dann auf eine bestimmte Höhe angehoben werden, um den Einstieg für den betreffenden Passagier P zu erleichtern. Natürlich kann die Hubplattform 5 ggf. wiederum mit dem Förderband 7 und/oder mit der Anpassung der Fördergeschwindigkeit der Seilbahnfahrzeuge 3 kombiniert werden. Die Höhenverstelleinrichtung 5a kann beispielsweise eine Anzahl von elektrisch ansteuerbaren Aktuatoren aufweisen, die geeignet sin, die Hubplattform in hinreichend geringer Zeit anzuheben und abzusenken. Als Aktuatoren wären beispielsweise Hydraulikzylinder, Pneumatikzylinder oder mechanische Stellantriebe denkbar.

Gemäß einer vorteilhaften Ausführungsform können auch zwei oder mehr verschiedene Sicherheitspassagiertypen festgelegt sein, wobei für einen ersten Sicherheitspassagiertyp ein erster Sicherheitsbetriebsmodus festgelegt ist und für einen zweiten Sicherheitspassagiertyp ein zweiter Sicherheitsbetriebsmodus festgelegt ist, der sich vom ersten Sicherheitsbetriebsmodus unterscheidet. Dadurch können die individuellen Bedürfnisse der Passagiere P noch besser berücksichtigt werden.

Beispielsweise kann für den ersten Sicherheitsbetriebsmodus eine erste Höhe der Hubplattform 5 festgelegt sein und für den zweiten Sicherheitsbetriebsmodus eine von der ersten Höhe verschiedene zweite Höhe der Hubplattform 5 festgelegt sein. Dadurch kann die Einstiegshöhe automatisch an verschiedene Körpergrößen angepasst werden. Alternativ oder zusätzlich kann für den ersten Sicherheitsbetriebsmodus eine erste Förderbandgeschwindigkeit des Förderbands 7 festgelegt sein und für den zweiten Sicherheitsbetriebsmodus eine von der ersten Förderbandgeschwindigkeit verschiedene zweite Förderbandgeschwindigkeit des Förderbands 7 festgelegt sein. Zudem kann zusätzlich oder alternativ für den ersten Sicherheitsbetriebsmodus eine erste Fördergeschwindigkeit der Seilbahnfahrzeuge 3 festgelegt sein und für den zweiten Sicherheitsbetriebsmodus eine von der ersten Fördergeschwindigkeit verschiedene zweite Fördergeschwindigkeit der Seilbahnfahrzeuge 3 festgelegt sein. Auch mehr als zwei Sicherheitsbetriebsmodi mit unterschiedlichen Einstellungen wären natürlich denkbar. Bei gleichzeitiger Detektion von zwei verschiedenen Sicherheitspassagiertypen im Einstiegsbereich E, kann z.B. in der Steuerungseinheit 6 festgelegt sein, welcher Sicherheitspassagiertyp Vorrang hat und der für diesen Sicherheitspassagiertyp festgelegte Sicherheitsbetriebsmodus ausgewählt werden.

Wie oben erwähnt wurde und wie in Fig.1 dargestellt ist, kann auch eine automatische Schrankeneinrichtung 12 zwischen dem Einstiegsbereich E und dem Zugangsbereich Z vorgesehen sein. Die Detektionseinrichtung kann in diesem Fall beispielsweise dazu ausgebildet sein, die Passagiere im Bereich der Schrankeneinrichtung 12 zu detektieren und die Passagiertypen zu ermitteln. Dadurch kann vorausschauend ein geeigneter Sicherheitsbetriebsmodus festgelegt werden. Dazu kann die Detektionseinrichtung beispielsweise zumindest Kamera 10 zur Aufnahme der der Schrankeneinrichtung 12 umfassen.

In der zweiten Seilbahnstation 2b ist ein Ausstiegsbereich A für die Passagiere P zum Aussteigen aus den Seilbahnfahrzeugen 3, hier insbesondere aus den Sesselfahrzeugen 3a, vorgesehen. Die Steuerungseinheit 6 der Seilbahn 1 kann auch dazu ausgebildet sein, die Seilbahn 1 zu einem Ausstiegszeitpunkt, zu dem sich ein Seilbahnfahrzeug 3 mit einem Passagier P, für den in der ersten Seilbahnstation 2a ein Sicherheitspassagiertyp ermittelt wurde, im Ausstiegsbereich A der zweiten Seilbahnstation 2b befindet, erneut in einem festgelegten Sicherheitsbetriebsmodus zu betreiben. Dadurch können auch beim Ausstieg die individuellen Bedürfnisse der Passagiere P berücksichtigt werden und der Ausstieg für die Passagiere P somit erleichtert werden. Der Ausstiegszeitpunkt kann von der Steuerungseinheit 6 beispielsweise anhand der Laufzeit des Seilbahnfahrzeugs 3 zwischen dem Einstiegsbereich E der ersten Seilbahnstation 2a und dem Ausstiegsbereich A der zweiten Seilbahnstation 2b ermittelt werden.

Die Laufzeit ist im Allgemeinen bekannt oder kann anhand einer Streckenlänge und einer Fördergeschwindigkeit ermittelt werden. Die Streckenlänge kann als bekannt vorausgesetzt werden oder könnte ggf. auch vermessen werden. Die Fördergeschwindigkeit kann ebenfalls als bekannt vorausgesetzt werden oder kann ggf. auch mit einem Sensor, z.B. am Förderseil 4 oder an der Antriebseinrichtung 8, gemessen werden oder aus anderen verfügbaren Größen, z.B. einer Drehzahl der ersten Antriebseinheit 8a, ermittelt werden. Die Steuerungseinheit 6 kann dann den Ausstiegszeitpunkt z.B. ausgehend vom Einstiegszeitpunkt in der ersten Seilbahnstation 2a und anhand der Laufzeit zwischen dem Einstiegsbereich E und dem Ausstiegsbereich A berechnen. Der Einstiegszeitpunkt kann dabei jener Zeitpunkt sein, zu dem ein Passagier P eines festgelegten Sicherheitspassagiertyps durch die Detektionseinrichtung erkannt wird.

Alternativ oder zusätzlich kann die Ermittlung des Ausstiegszeitpunkt auch anhand einer eindeutigen Fahrzeugkennung der Seilbahnfahrzeuge 3 erfolgen. Beispielsweise kann die Detektionseinrichtung in der ersten Seilbahnstation 2a dazu ausgebildet sein, die Fahrzeugkennung des Seilbahnfahrzeugs 3, das sich bei der Detektion eines Sicherheitspassagiertyps im Einstiegsbereich E befindet, zu ermitteln und an die Steuerungseinheit 6 zu übermitteln. Die Steuerungseinheit 6 kann dann, beispielsweise wiederum anhand der Laufzeit, den Ausstiegszeitpunkt ermitteln, zu dem sich das Seilbahnfahrzeug 3 mit der betreffenden Fahrzeugkennung im Ausstiegsbereich A befindet und entsprechend, z.B. für eine festgelegte Dauer, in den Sicherheitsbetriebsmodus schalten.

In der ersten Seilbahnstation 2a könnte aber auch zusätzlich zur Detektionseinrichtung eine separate (nicht dargestellte) erste Leseeinrichtung zum Auslesen der Fahrzeugkennung des, sich bei Detektion eines Sicherheitspassagiertyps im Einstiegsbereich E befindlichen, Seilbahnfahrzeugs 3 vorgesehen sein. Die erste Leseeinrichtung kann über eine geeignete drahtlos und/oder drahtgebundene Kommunikationsverbindung mit der Steuerungseinheit 6 verbunden sein. Die Steuerungseinheit 6 kann die von der ersten Leseeinrichtung erhaltene Fahrzeugkennung wiederum zur Ermittlung des Ausstiegszeitpunkts, zu dem sich das betreffende Seilbahnfahrzeug 3 mit dem Passagier P des Sicherheitspassagiertyps im Ausstiegsbereich A der zweiten Seilbahnstation 2b befindet, verwenden. Dies kann erneut über die bekannte Laufzeit des Seilbahnfahrzeugs 3 erfolgen. Alternativ zur Ermittlung des Ausstiegszeitpunkts über die Laufzeit, könnte auch in der zweiten Seilbahnstation 2b eine zweite Leseeinrichtung zum Auslesen der Fahrzeugkennung vorgesehen sein, die in geeigneter Weise mit der Steuerungseinheit 6 kommuniziert. Die Steuerungseinheit 6 kann die von der zweiten Leseeinrichtung erhaltene Fahrzeugkennung verwenden, um den Ausstiegszeitpunkt zu ermitteln und die Seilbahn 1 in einen festgelegten Sicherheitsbetriebsmodus zu schalten.

Beispielsweise kann die Detektionseinrichtung die im Einstiegsbereich E (oder im Bereich der Sicherheitsschranken 12) der ersten Seilbahnstation 2a befindlichen Passagiere P detektieren und für jeden Passagier P den Passagiertyp ermitteln. Die Steuerungseinheit 6 kann die von der Detektionseinrichtung, z.B. der Auswerteeinheit 11, erhaltene Information über die Passagiertypen dazu verwenden, um festzustellen, ob es sich bei zumindest einem der Passagiertypen um einen hinterlegten Sicherheitspassagiertyp handelt. Wenn das der Fall ist, dann kann die Steuerungseinheit 6 die Umlaufseilbahn 1, z.B. für eine festgelegte Dauer, in einen festgelegten Sicherheitsbetriebsmodus schalten. Wird kein Sicherheitspassagiertyp erkannt, kann die Seilbahn im normalen Betriebsmodus weiterbetrieben werden.

Zudem kann die Detektionseinrichtung oder die erste Leseeinrichtung die eindeutige Fahrzeugkennung des aktuell im Einstiegsbereich E befindlichen Seilbahnfahrzeugs 3 auslesen und ebenfalls an die Steuerungseinheit 6 übermitteln. Die Steuerungseinheit 6 kann die erhaltene Fahrzeugkennung dazu verwenden, um die Umlaufseilbahn 1 zu einem Ausstiegszeitpunkt, zu dem sich das betreffende Seilbahnfahrzeug 3 im Ausstiegsbereich A der zweiten Seilbahnstation 2b befindet, z.B. für eine festgelegte Dauer, in einen festgelegten Sicherheitsbetriebsmodus zu schalten. Der Ausstiegszeitpunkt kann, wie bereits erwähnt, über die Laufzeit und/oder oder über die in der zweiten Seilbahnstation 2b angeordnete zweite Leseeinrichtung ermittelt werden. Natürlich kann auch als zweite Leseeinrichtung eine analoge Detektionseinrichtung wie in der ersten Seilbahnstation 2a verwendet werden, die beispielsweise zumindest eine Kamera 10 und eine Auswerteeinheit 11 aufweist.

Wenn die Detektionseinrichtung (hier Kamera 10 + Auswerteeinheit 11) zum Auslesen der Fahrzeugkennung verwendet wird, dann kann als Fahrzeugkennung z.B. ein charakteristisches optisches Merkmal an der Außenseite der Seilbahnfahrzeuge 3 verwendet werden, das von der Auswerteeinheit 11 erkannt werden kann. Denkbar wäre z.B. ein QR-Code, eine Identifikationsnummer oder eine eindeutige Abbildung, die z.B. in Form eines Aufklebers. Die separate Leseeinrichtung zum Auslesen der Fahrzeugkennung könnte z.B. ein Strichcode-Leser sein und als Fahrzeugkennung könnte ein Strichcode verwendet werden. Auch die Verwendung von NFC bzw. RFID wäre möglich. Hierbei könnte an den Seilbahnfahrzeugen 3 jeweils ein, vorzugsweise passiver, Transponder vorgesehen sein und in der ersten Seilbahnstation 2a (und ggf. in der zweiten Seilbahnstation 2b) könnte ein NFC oder RFID-Lesegerät vorgesehen sein, das den Transponder auslesen kann.

Gemäß einer weiteren vorteilhaften Ausführungsform der Erfindung kann in zumindest einer der Seilbahnstationen 2a, 2b eine (in Fig.1 nicht dargestellte) Signaleinrichtung vorgesehen sein und die Steuerungseinheit 6 kann dazu ausgebildet sein, die Signaleinrichtung zur Wiedergabe eines Signals anzusteuern, wenn sich die Umlaufseilbahn 1 in einem Sicherheitsbetriebsmodus befindet. Die Signaleinrichtung kann beispielsweise zur Information für Passagiere vorgesehen sein und/oder zur Information des Bedienpersonals (sofern vorhanden). Die Signaleinrichtung könnte z.B. zur Ausgabe eines optischen und/oder akustischen Signals ausgebildet sein. Die Signaleinrichtung könnte dazu beispielsweise zumindest eine Signallampe und/oder einen Bildschirm und/oder einen Lautsprecher aufweisen. Die Signaleinrichtung könnte beispielsweise auch dazu ausgebildet sein, als Signal eine Information wiederzugeben, z.B. über einen Bildschirm oder über ein mobiles Endgerät.

Abschließend wird nochmal darauf hingewiesen, dass die beschriebene Sesselbahn lediglich beispielhaft zu verstehen ist. Die Erfindung könnte in analoger Weise natürlich auch bei einer Kabinenbahn oder bei einer Kombi-Bahn verwendet werden. Wenn die Umlaufseilbahn 1 als Kabinenbahn ausgebildet ist, dann umfasst der Einstiegsbereich E, für den die Detektionseinrichtung vorgesehen ist, einen Kabinen-Einstiegsbereich, der zum Einstieg der Passagiere P in die Kabinenfahrzeuge dient. Wenn die Umlaufseilbahn 1 als Kombi-Bahn ausgebildet ist, dann kann der Einstiegsbereich E, für den die Detektionseinrichtung vorgesehen ist, den Sessel-Einstiegsbereich zum Einstieg der Passagiere P in die Sesselfahrzeuge 3a und/oder den Kabinen-Einstiegsbereich zum Einstieg der Passagiere P in die Kabinenfahrzeuge umfassen.

## Patentansprüche

1. Umlaufseilbahn (1) mit einer Anzahl von Seilbahnstationen (2a, 2b) und einer Anzahl von Seilbahnfahrzeugen (3), die mit einem Förderseil (4) zwischen den Seilbahnstationen (2a, 2b) bewegbar sind, wobei in einer ersten Seilbahnstation (2a) ein Einstiegsbereich (E) für Passagiere (P) zum Einsteigen in die Seilbahnfahrzeuge (3) vorgesehen ist und wobei eine Steuerungseinheit (6) zur Steuerung der Umlaufseilbahn (1) vorgesehen ist, wobei in der ersten Seilbahnstation (2a) eine Detektionseinrichtung vorgesehen ist, die dazu ausgebildet ist, im Einstiegsbereich (E) befindliche Passagiere (P) zu detektieren und für jeden der detektierten Passagiere einen Passagiertyp zu ermitteln und dass die Steuerungseinheit (6) dazu ausgebildet ist, die Umlaufseilbahn (1) in einem festgelegten Sicherheitsbetriebsmodus zu betreiben, wenn zumindest ein ermittelter Passagiertyp ein festgelegter Sicherheitspassagiertyp ist, wobei im Einstiegsbereich (E) ein Förderband (7) zur Förderung der Passagiere (P) in einer Bewegungsrichtung (B) der Seilbahnfahrzeuge (3) vorgesehen ist, wobei das Förderband (7) eine Förderband-Antriebseinheit (7a) zum Antrieb des Förderbandes (7) aufweist, wobei eine Seilbahn-Antriebseinrichtung (8) zum Antrieb der Seilbahnfahrzeuge (3) vorgesehen ist, **dadurch gekennzeichnet, dass** die Steuerungseinheit (6) dazu ausgebildet ist, die Förderband-Antriebseinheit (7a) im Sicherheitsbetriebsmodus anzusteuern, um eine Förderbandgeschwindigkeit des Förderbands (7) auf eine festgelegte oder festlegbare Förderbandgeschwindigkeit zu reduzieren **und dass** die Steuerungseinheit (6) dazu ausgebildet ist, die Seilbahn-Antriebseinrichtung (8) im Sicherheitsbetriebsmodus anzusteuern, um eine Fördergeschwindigkeit der Seilbahnfahrzeuge (3) auf eine festgelegte oder festlegbare Fördergeschwindigkeit zu reduzieren.

2. Umlaufseilbahn (1) nach Anspruch 1, **dadurch gekennzeichnet, dass** im Einstiegsbereich (E) eine Hubplattform (5) für Passagiere mit einer Höhenverstelleinrichtung (5a) vorgesehen ist **und dass** die Steuerungseinheit (6) dazu ausgebildet ist, die Höhenverstelleinrichtung (5a) im Sicherheitsbetriebsmodus anzusteuern, um die Hubplattform (5) auf eine festgelegte oder festlegbare Höhe anzuheben.

3. Umlaufseilbahn (1) nach einem der Ansprüche 1 bis 2, **dadurch gekennzeichnet, dass** die Detektionseinrichtung zumindest eine Kamera (10) zur Erfassung des Einstiegsbereichs (E) aufweist und eine Auswerteeinheit (11) aufweist, die dazu ausgebildet ist, aus einer Anzahl von, von der zumindest einen Kamera (10) erfassten Bildern, die im Einstiegsbereich (E) befindlichen Passagiere (P) zu detektieren und für jeden detektierten Passagier (P) den Passagiertyp zu ermitteln, wobei die zumindest eine Kamera (10) vorzugsweise eine 3D-Kamera oder eine Infrarotkamera umfasst und wobei in der Auswerteeinheit (11) vorzugsweise ein Bilderkennungsmodell hinterlegt ist.

4. Umlaufseilbahn (1) nach einem der Ansprüche 1 bis 3, **dadurch gekennzeichnet, dass** der ermittelbare Sicherheitspassagiertyp zumindest einen der folgenden Passagiertypen umfasst: Passagier unterhalb einer festgelegten Körpergröße, Passagier oberhalb einer festgelegten Körpergröße, Passagier mit Snowboard, Passagier mit Snowbike, Passagier mit Rollstuhl, Passagier mit Bob oder Schlitten, Passagier mit Monoski, Passagier mit Fahrrad, Passagier mit Gepäckstück, Passagier mit Kleinkind, Passagier mit Haustier, Passagier mit Rettungsausrüstung, insbesondere Akia, Passagier mit Gehhilfe.

5. Umlaufseilbahn (1) nach einem der Ansprüche 1 bis 4, **dadurch gekennzeichnet, dass** zumindest zwei verschiedene Sicherheitspassagiertypen festgelegt sind, wobei für einen ersten Sicherheitspassagiertyp ein erster Sicherheitsbetriebsmodus festgelegt ist und für einen zweiten Sicherheitspassagiertyp ein zweiter Sicherheitsbetriebsmodus festgelegt ist, der sich vom ersten Sicherheitsbetriebsmodus unterscheidet.

6. Umlaufseilbahn (1) nach Anspruch 5, **dadurch gekennzeichnet, dass** für den ersten Sicherheitsbetriebsmodus eine erste Höhe der Hubplattform (5) festgelegt ist und für den zweiten Sicherheitsbetriebsmodus eine von der ersten Höhe verschiedene zweite Höhe der Hubplattform (5) festgelegt ist und/oder dass für den ersten Sicherheitsbetriebsmodus eine erste Förderbandgeschwindigkeit des Förderbands (7) festgelegt ist und für den zweiten Sicherheitsbetriebsmodus eine von der ersten Förderbandgeschwindigkeit verschiedene zweite Förderbandgeschwindigkeit des Förderbands (7) festgelegt ist und/oder dass für den ersten Sicherheitsbetriebsmodus eine erste Fördergeschwindigkeit der Seilbahnfahrzeuge (3) festgelegt ist und für den zweiten Sicherheitsbetriebsmodus eine von der ersten Fördergeschwindigkeit verschiedene zweite Fördergeschwindigkeit der Seilbahnfahrzeuge (3) festgelegt ist.

7. Umlaufseilbahn (1) nach einem der Ansprüche 1 bis 6, **dadurch gekennzeichnet, dass** ein Zugangsbereich (Z) für den Zugang der Passagiere zum Einstiegsbereich (E) vorgesehen ist, wobei zwischen dem Zugangsbereich (Z) und dem Einstiegsbereich (E) eine automatische Schrankeneinrichtung (12) vorgesehen ist, die dazu ausgebildet ist, den Zugang für die Passagiere (P) zum Einstiegsbereich (E) zyklisch freizugeben und dass die Detektionseinrichtung dazu ausgebildet ist, die Passagiertypen im Bereich der Schrankeneinrichtung (12) zu ermitteln.

8. Umlaufseilbahn (1) nach einem der Ansprüche 1 bis 7, **dadurch gekennzeichnet, dass** in einer zweiten Seilbahnstation (2b) ein Ausstiegsbereich (A) für Passagiere (P) zum Aussteigen aus den Seilbahnfahrzeugen (3) vorgesehen ist und dass die Steuerungseinheit (6) dazu ausgebildet ist, die Umlaufseilbahn (1) zu einem Ausstiegszeitpunkt, zu dem sich ein Seilbahnfahrzeug (3) mit einem Passagier (P), für den in der ersten Seilbahnstation (2a) ein Sicherheitspassagiertyp ermittelt wurde, im Ausstiegsbereich (A) befindet, erneut in einem festgelegten Sicherheitsbetriebsmodus zu betreiben, wobei jedes Seilbahnfahrzeug (3) vorzugsweise eine eindeutige Fahrzeugkennung aufweist und die Steuerungseinheit (6) vorzugsweise dazu ausgebildet ist, den Ausstiegszeitpunkt anhand der Fahrzeugkennung zu ermitteln.

9. Verfahren zum Betreiben einer Umlaufseilbahn (1), die eine Anzahl von Seilbahnstationen (2a, 2b) und einer Anzahl von Seilbahnfahrzeugen (3) aufweist, die mit einem Förderseil (4) zwischen den Seilbahnstationen (2a, 2b) bewegbar sind, wobei die Umlaufseilbahn (1) von einer Steuerungseinheit (6) gesteuert wird und wobei in einer ersten Seilbahnstation (2a) ein Einstiegsbereich (E) für Passagiere (P) zum Einsteigen in die Seilbahnfahrzeuge (3) vorgesehen ist, wobei mit einer Detektionseinrichtung im Einstiegsbereich (E) befindliche Passagiere (P) detektiert werden und für jeden der detektierten Passagiere (P) ein Passagiertyp ermittelt wird und dass die Steuerungseinheit (6) die Umlaufseilbahn (1) in einem festgelegten Sicherheitsbetriebsmodus betreibt, wenn zumindest einer der ermittelten Passagiertypen ein festgelegter Sicherheitspassagiertyp ist, wobei im Einstiegsbereich (E) ein Förderband (7) zur Förderung der Passagiere (P) in einer Bewegungsrichtung (B) der Seilbahnfahrzeuge (3) vorgesehen ist, **dadurch gekennzeichnet, dass** eine Förderbandgeschwindigkeit des Förderbands (7) im Sicherheitsbetriebsmodus auf eine festgelegte oder festlegbare Förderbandgeschwindigkeit reduziert wird **und dass** eine Fördergeschwindigkeit der Seilbahnfahrzeuge (3) im Sicherheitsbetriebsmodus auf eine festgelegte oder festlegbare Fördergeschwindigkeit reduziert wird.

10. Verfahren nach Anspruch 9, **dadurch gekennzeichnet, dass** im Einstiegsbereich (E) eine Hubplattform (5) für Passagiere (P) vorgesehen ist **und dass** die Hubplattform (5) im Sicherheitsbetriebsmodus auf eine festgelegte oder festlegbare Höhe angehoben wird.

11. Verfahren nach Anspruch 9 oder 10, **dadurch gekennzeichnet, dass** als Detektionseinrichtung zumindest eine Kamera (10), die den Einstiegsbereich (E) erfasst, und eine Auswerteeinheit (11), die aus einer Anzahl von, von der zumindest einen Kamera erfassten Bildern, die Passagieren im Einstiegsbereich (E) detektiert und für jeden detektierten Passagier den Passagiertyp ermitteln, verwendet werden, wobei als Kamera (10) vorzugsweise eine 3D-Kamera oder eine Infrarotkamera verwendet wird und wobei in der Auswerteeinheit (11) vorzugsweise ein Bilderkennungsmodell verwendet wird.

12. Verfahren nach einem der Ansprüche 9 bis 11, **dadurch gekennzeichnet, dass** als ermittelbarer Sicherheitspassagiertyp zumindest einen der folgenden Passagiertypen festgelegt wird: Passagier unterhalb einer festgelegten Körpergröße, Passagier oberhalb einer festgelegten Körpergröße, Passagier mit Snowboard, Passagier mit Snowbike, Passagier mit Rollstuhl, Passagier mit Bob oder Schlitten, Passagier mit Monoski, Passagier mit Fahrrad, Passagier mit Gepäckstück, Passagier mit Kleinkind, Passagier mit Haustier, Passagier mit Rettungsausrüstung, insbesondere Akia, Passagier mit Gehhilfe.

13. Verfahren nach einem der Ansprüche 9 bis 12, **dadurch gekennzeichnet, dass** zumindest zwei verschiedene Sicherheitspassagiertypen festgelegt werden, wobei für einen ersten Sicherheitspassagiertyp ein erster Sicherheitsbetriebsmodus festgelegt wird und für einen zweiten Sicherheitspassagiertyp ein zweiter Sicherheitsbetriebsmodus festgelegt wird, der sich vom ersten Sicherheitsbetriebsmodus unterscheidet.

14. Verfahren nach Anspruch 13, **dadurch gekennzeichnet, dass** für den ersten Sicherheitsbetriebsmodus eine erste Höhe der Hubplattform (5) festgelegt wird und für den zweiten Sicherheitsbetriebsmodus eine von der ersten Höhe verschiedene zweite Höhe der Hubplattform (5) festgelegt wird und/oder dass für den ersten Sicherheitsbetriebsmodus eine erste Förderbandgeschwindigkeit des Förderbandgeschwindigkeit (7) festgelegt wird und für den zweiten Sicherheitsbetriebsmodus eine von der ersten Förderbandgeschwindigkeit verschiedene zweite Förderbandgeschwindigkeit des Förderbands (7) festgelegt wird und/oder dass für den ersten Sicherheitsbetriebsmodus eine erste Fördergeschwindigkeit der Seilbahnfahrzeuge (3) festgelegt wird und für den zweiten Sicherheitsbetriebsmodus eine von der ersten Fördergeschwindigkeit verschiedene zweite Fördergeschwindigkeit der Seilbahnfahrzeuge (3) festgelegt wird.

15. Verfahren nach einem der Ansprüche 9 bis 14, **dadurch gekennzeichnet, dass** ein Zugangsbereich (Z) für den Zugang der Passagiere zum Einstiegsbereich (E) vorgesehen ist, wobei zwischen dem Zugangsbereich (Z) und dem Einstiegsbereich (E) eine automatische Schrankeneinrichtung (12) vorgesehen ist, die den Zugang für die Passagiere (P) zum Einstiegsbereich (E) zyklisch freigibt und dass die Detektionseinrichtung die Passagiertypen im Bereich der Schrankeneinrichtung (12) ermittelt.

16. Verfahren nach einem der Ansprüche 9 bis 15, **dadurch gekennzeichnet, dass** in einer zweiten Seilbahnstation (2b) ein Ausstiegsbereich (A) für Passagiere (P) zum Aussteigen aus den Seilbahnfahrzeugen (3) vorgesehen ist und dass die Steuerungseinheit (6) die Umlaufseilbahn (1) zu einem Ausstiegszeitpunkt, in einem festgelegten Sicherheitsbetriebsmodus betreibt, zu dem sich ein Seilbahnfahrzeug (3) mit einem Passagier (P), für den in der ersten Seilbahnstation (2a) ein Sicherheitspassagiertyp ermittelt wurde, im Ausstiegsbereich (A) befindet, wobei vorzugsweise für jedes Seilbahnfahrzeug (3) eine eindeutige Fahrzeugkennung vorgesehen wird und die Steuerungseinheit (6) den Ausstiegszeitpunkt vorzugsweise anhand der Fahrzeugkennung ermittelt.

## Claims

1. A circulating cableway (1) having a number of cableway stations (2a, 2b) and a number of cableway vehicles (3) which can be moved with a conveyor cable (4) between the cableway stations (2a, 2b), wherein a boarding region (E) for passengers (P) for boarding the cableway vehicles (3) is provided in a first cableway station (2a), and wherein a control unit (6) is provided for controlling the circulating cableway (1), wherein a detection device is provided in the first cableway station (2a) which is designed to detect passengers (P) present in the boarding region (E) and to determine a passenger type for each of the detected passengers, and in that the control unit (6) is designed to operate the circulating cableway (1) in a specified safe operating mode when at least one determined passenger type is a specified safety passenger type, wherein a conveyor belt (7) is provided in the boarding region (E) for conveying the passengers (P) in a movement direction (B) of the cableway vehicles (3), wherein the conveyor belt (7) has a conveyor belt drive unit (7a) for driving the conveyor belt (7), wherein a cableway drive device (8) for driving the cableway vehicles (3) is provided, **characterized in that** the control unit (6) is designed to control the conveyor belt drive unit (7a) in safe operating mode in order to reduce a conveyor belt speed of the conveyor belt (7) to a specified or specifiable conveyor belt speed, **and in that** the control unit (6) is designed to control the cableway drive device (8) in safe operating mode in order to reduce a conveying speed of the cableway vehicles (3) to a specified or specifiable conveying speed.

2. The circulating cableway (1) according to claim 1, **characterized in that a** lift platform (5) for passengers having a height adjustment device (5a) is provided in the boarding region (E), **and in that** the control unit (6) is designed to control the height adjustment device (5a) in safe operating mode in order to raise the lift platform (5) to a specified or specifiable height.

3. The circulating cableway (1) according to either of claims 1 to 2, **characterized in that** the detection device has at least one camera (10) for capturing the boarding region (E) and has an evaluation unit (11) which is designed to detect the passengers (P) present in the boarding region (E) from a number of images captured by the at least one camera (10), and to determine the passenger type for each detected passenger (P), wherein the at least one camera (10) preferably comprises a 3D camera or an infrared camera, and wherein an image recognition model is preferably stored in the evaluation unit (11).

4. The circulating cableway (1) according to any one of claims 1 to 3, **characterized in that** the determinable safety passenger type comprises at least one of the following passenger types: passenger below a specified height, passenger above a specified height, passenger with snowboard, passenger with snowbike, passenger with wheelchair, passenger with bobsled or sled, passenger with monoski, passenger with bicycle, passenger with luggage, passenger with small child, passenger with pet, passenger with rescue equipment, in particular akia, and passenger with walking aid.

5. The circulating cableway (1) according to any one of claims 1 to 4, **characterized in that** at least two different safety passenger types are specified, wherein a first safe operating mode is specified for a first safety passenger type, and a second safe operating mode which differs from the first safe operating mode is specified for a second safety passenger type.

6. The circulating cableway (1) according to claim 5, **characterized in that** a first height of the lifting platform (5) is specified for the first safe operating mode, and a second height of the lifting platform (5) different from the first height is specified for the second safe operating mode, and/or **in that** a first conveyor belt speed of the conveyor belt (7) is specified for the first safe operating mode, and a second conveyor belt speed of the conveyor belt (7) different from the first conveyor belt speed is specified for the second safe operating mode, and/or **in that** a first conveying speed of the cableway vehicles (3) is specified for the first safe operating mode, and a second conveying speed of the cableway vehicles (3) different from the first conveying speed is specified for the second safe operating mode.

7. The circulating cableway (1) according to any one of claims 1 to 6, **characterized in that** an access region (Z) for access by the passengers to the boarding region (E) is provided, wherein an automatic barrier device (12) is provided between the access region (Z) and the boarding region (E), which is designed to cyclically release the access for the passengers (P) to the boarding region (E), and **in that** the detection device is designed to determine the passenger types in the region of the barrier device (12).

8. The circulating cableway (1) according to any one of claims 1 to 7, **characterized in that** in a second cableway station (2b), an exit region (A) is provided for passengers (P) for exiting the cableway vehicles (3), and **in that** the control unit (6) is designed to again operate the circulating cableway (1) in a fixed safe operating mode at an exit time at which a cableway vehicle (3) is located in the exit region (A) with a passenger (P) for which a safety passenger safety was determined in the first cableway station (2a), wherein each cableway vehicle (3) preferably has a unique vehicle ID, and the control unit (6) is preferably designed to determine the exit time on the basis of the vehicle ID.

9. A method for operating a circulating cableway (1) which has a number of cableway stations (2a, 2b) and a number of cableway vehicles (3) which can be moved between the cableway stations (2a, 2b) using a conveyor cable (4), wherein the circulating cableway (1) is controlled by a control unit (6), and wherein a boarding region (E) for passengers (P) for boarding the cableway vehicles (3) is provided in a first cableway station (2a), wherein passengers (P) present in the boarding region (E) are detected by means of a detection device, and a passenger type is determined for each of the detected passengers (P), and in that the control unit (6) operates the circulating cableway (1) in a specified safe operating mode when at least one of the determined passenger types is a specified safety passenger type, wherein a conveyor belt (7) for conveying the passengers (P) in a direction of movement (B) of the cableway vehicles (3) is provided in the boarding region (E), **characterized in that** a conveyor belt speed of the conveyor belt (7) in safe operating mode is reduced to a specified or specifiable conveyor belt speed, **and/or in that** a conveying speed of the cableway vehicles (3) in safe operating mode is reduced to a specified or specifiable conveying speed.

10. A method according to claim 9, **characterized in that** a lift platform (5) for passengers (P) is provided in the boarding region (E), **and in that** the lift platform (5) is raised in safe operating mode to a specified or specifiable height.

11. The method according to claim 9 or claim 10, **characterized in that** at least one camera (10), which captures the boarding area (E), and an evaluation unit (11), which detects the passengers in the boarding area (E) from a number of images recorded by the at least one camera and which determines the passenger type for each detected passenger, are used as the detection device, wherein a 3D camera or an infrared camera is preferably used as the camera (10), and wherein an image recognition model is preferably used in the evaluation unit (11).

12. The method according to any one of claims 9 to 11, **characterized in that** at least one of the following passenger types is specified as the specified safety passenger type: passenger below a specified height, passenger above a specified height, passenger with snowboard, passenger with snowbike, passenger with wheelchair, passenger with bobsled or sled, passenger with monoski, passenger with bicycle, passenger with luggage, passenger with small child, passenger with pet, passenger with rescue equipment, in particular akia, and passenger with walking aid.

13. The method according to any one of claims 9 to 12, **characterized in that** at least two different safety passenger types are specified, wherein a first safe operating mode is specified for a first safety passenger type, and a second safe operating mode which differs from the first safe operating mode is specified for a second safety passenger type.

14. The method according to claim 13, **characterized in that** a first height of the lifting platform (5) is specified for the first safe operating mode, and a second height of the lifting platform (5) different from the first height is specified for the second safe operating mode, and/or **in that** a first conveyor belt speed of the conveyor belt (7) is specified for the first safe operating mode, and a second conveyor belt speed of the conveyor belt (7) different from the first conveyor belt speed is specified for the second safe operating mode, and/or a first conveying speed of the cableway vehicles (3) is specified for the first safe operating mode, and a second conveying speed of the cableway vehicles (3) different from the first conveying speed is specified for the second safe operating mode.

15. The method according to any one of claims 9 to 14, **characterized in that** an access region (Z) for access by the passengers to the boarding region (E) is provided, wherein an automatic barrier device (12) is provided between the access region (Z) and the boarding region (E), which cyclically releases the access for the passengers (P) to the boarding region (E), and **in that** the detection device determines the passenger types in the region of the barrier device (12).

16. The method according to any one of claims 9 to 15, **characterized in that** in a second cableway station (2b), an exit region (A) is provided for passengers (P) for exiting the cableway vehicles (3), and **in that** the control unit (6) operates the circulating cableway (1) in a specified safe operating mode at an exit time at which a cableway vehicle (3) is located in the exit region (A) with a passenger (P) for which a safety passenger type was determined in the first cableway station (2a), wherein a unique vehicle ID is preferably provided for each cableway vehicle (3), and the control unit (6) preferably determines the exit time on the basis of the vehicle ID.

## Revendications

1. Téléphérique à mouvement continu (1) comportant un certain nombre de stations de téléphérique (2a, 2b) et un certain nombre de véhicules de téléphérique (3) qui peuvent être déplacés entre les stations de téléphérique (2a, 2b) au moyen d'un câble de transport (4), dans lequel une zone d'embarquement (E) pour les passagers (P) permettant l'embarquement dans les véhicules de téléphérique (3) est prévue dans une première station de téléphérique (2a) et dans lequel une unité de commande (6) est prévue pour commander le téléphérique à mouvement continu (1), dans lequel un dispositif de détection est prévu dans la première station de téléphérique (2a), lequel est réalisé pour détecter des passagers (P) se trouvant dans la zone d'embarquement (E) et pour déterminer un type de passager pour chacun des passagers détectés, et en ce que l'unité de commande (6) est réalisée pour faire fonctionner le téléphérique à mouvement continu (1) dans un mode de fonctionnement de sécurité établi, lorsqu'au moins un type de passager déterminé est un type de passager de sécurité établi, dans lequel une bande transporteuse (7) est prévue dans la zone d'embarquement (E) pour le transport des passagers (P) dans une direction de déplacement (B) des véhicules de téléphérique (3), dans lequel la bande transporteuse (7) présente une unité d'entraînement de bande transporteuse (7a) pour entraîner la bande transporteuse (7), dans lequel un dispositif d'entraînement de téléphérique (8) est prévu pour l'entraînement des véhicules de téléphérique (3), **caractérisé en ce que** l'unité de commande (6) est réalisée pour commander l'unité d'entraînement de bande transporteuse (7a) en mode de fonctionnement de sécurité, pour réduire une vitesse de bande transporteuse de la bande transporteuse (7) à une vitesse de bande transporteuse établie ou pouvant être établie, **et en ce que** l'unité de commande (6) est réalisée pour commander le dispositif d'entraînement de téléphérique (8) en mode de fonctionnement de sécurité, pour réduire une vitesse de transport des véhicules de téléphérique (3) à une vitesse de transport établie ou pouvant être établie.

2. Téléphérique à mouvement continu (1) selon la revendication 1, **caractérisé en ce qu'**une plateforme de levage (5) pour les passagers comportant un dispositif de réglage de hauteur (5a) est prévue dans la zone d'embarquement (E) **et en ce que** l'unité de commande (6) est réalisée pour commander le dispositif de réglage de hauteur (5a) en mode de fonctionnement de sécurité pour soulever la plateforme de levage (5) à une hauteur établie ou pouvant être établie.

3. Téléphérique à mouvement continu (1) selon l'une des revendications 1 à 2, **caractérisé en ce que** le dispositif de détection présente au moins une caméra (10) pour acquérir la zone d'embarquement (E) et présente une unité d'évaluation (11) qui est réalisée, à partir d'un certain nombre d'images acquises par l'au moins une caméra (10), détecter les passagers (P) se trouvant dans la zone d'embarquement (E) et déterminer le type de passager pour chaque passager (P) détecté, dans lequel l'au moins une caméra (10) comprend de préférence une caméra 3D ou une caméra infrarouge et dans lequel un modèle de reconnaissance d'image est de préférence enregistré dans l'unité d'évaluation (11).

4. Téléphérique à mouvement continu (1) selon l'une des revendications 1 à 3, **caractérisé en ce que** le type de passager de sécurité pouvant être déterminé comprend au moins l'un des types de passagers suivants : passager en dessous d'une taille établie, passager au-dessus d'une taille établie, passager avec planche à neige, passager avec vélo à neige, passager avec fauteuil roulant, passager avec bobsleigh ou luge, passager avec monoski, passager avec vélo, passager avec bagage, passager avec jeune enfant, passager avec animal domestique, passager avec équipement de sauvetage, notamment barquette, passager avec déambulateur.

5. Téléphérique à mouvement continu (1) selon l'une des revendications 1 à 4, **caractérisé en ce qu'**au moins deux types de passager de sécurité différents sont établis, dans lequel un premier mode de fonctionnement de sécurité est établi pour un premier type de passager de sécurité et un second mode de fonctionnement de sécurité est établi pour un second type de passager de sécurité, qui est différent du premier mode de fonctionnement de sécurité.

6. Téléphérique à mouvement continu (1) selon la revendication 5, **caractérisé en ce que,** pour le premier mode de fonctionnement de sécurité, une première hauteur de la plateforme de levage (5) est établie et, pour le second mode de fonctionnement de sécurité, une seconde hauteur de la plateforme de levage (5), différente de la première hauteur, est établie **et/ou en ce que,** pour le premier mode de fonctionnement de sécurité, une première vitesse de bande transporteuse de la bande transporteuse (7) est établie et, pour le second mode de fonctionnement de sécurité, une seconde vitesse de bande transporteuse de la bande transporteuse (7) est établie, différente de la première vitesse de bande transporteuse **et/ou en ce que,** pour le premier mode de fonctionnement de sécurité, une première vitesse de transport des véhicules de téléphérique (3) est établie et, pour le second mode de fonctionnement de sécurité, une seconde vitesse de transport des véhicules de téléphérique (3) différente de la première vitesse de transport est établie.

7. Téléphérique à mouvement continu (1) selon l'une des revendications 1 à 6, **caractérisé en ce qu'**une zone d'accès (Z) est prévue pour l'accès des passagers à la zone d'embarquement (E), dans lequel un dispositif de barrière (12) automatique est prévu entre la zone d'accès (Z) et la zone d'embarquement (E), lequel est réalisé pour libérer de manière cyclique l'accès pour les passagers (P) à la zone d'embarquement (E) **et en ce que** le dispositif de détection est réalisé pour déterminer les types de passagers dans la zone du dispositif de barrière (12).

8. Téléphérique à mouvement continu (1) selon l'une des revendications 1 à 7, **caractérisé en ce que,** dans une seconde station de téléphérique (2b), une zone de débarquement (A) pour des passagers (P) est prévue pour le débarquement des véhicules de téléphérique (3) **et en ce que** l'unité de commande (6) est réalisée pour faire fonctionner le téléphérique à mouvement continu (1) à un moment de débarquement auquel un véhicule de téléphérique (3) avec un passager (P), pour lequel un type de passager de sécurité a été déterminé dans la première station de téléphérique (2a), se trouve dans la zone de débarquement (A), à nouveau dans un mode de fonctionnement de sécurité établi, dans lequel chaque véhicule de téléphérique (3) présente de préférence un identifiant de véhicule unique et l'unité de commande (6) est de préférence réalisée pour déterminer le moment de débarquement à l'aide de l'identifiant de véhicule.

9. Procédé permettant de faire fonctionner un téléphérique à mouvement continu (1) qui présente un certain nombre de stations de téléphérique (2a, 2b) et un certain nombre de véhicules de téléphérique (3) qui peuvent être déplacés au moyen d'un câble de transport (4) entre les stations de téléphérique (2a, 2b), dans lequel le téléphérique à mouvement continu (1) est commandé par une unité de commande (6) et dans lequel une zone d'embarquement (E) pour des passagers (P) permettant l'embarquement dans les véhicules de téléphérique (3) est prévue dans une première station de téléphérique (2a), dans lequel des passagers (P) se trouvant dans la zone d'embarquement (E) sont détectés par un dispositif de détection et un type de passager est déterminé pour chacun des passagers (P) détectés et en ce que l'unité de commande (6) fait fonctionner le téléphérique à mouvement continu (1) dans un mode de fonctionnement de sécurité établi, lorsqu'au moins l'un des types de passagers déterminés est un type de passager de sécurité établi, dans lequel une bande transporteuse (7) est prévue dans la zone d'embarquement (E) pour transporter les passagers (P) dans une direction de déplacement (B) des véhicules de téléphérique (3), **caractérisé en ce qu'**une vitesse de bande transporteuse de la bande transporteuse (7) est réduite dans le mode de fonctionnement de sécurité à une vitesse de bande transporteuse établie ou pouvant être établie, **et en ce qu'**une vitesse de transport des véhicules de téléphérique (3) est réduite dans le mode de fonctionnement de sécurité à une vitesse de transport établie ou pouvant être établie.

10. Procédé selon la revendication 9, **caractérisé en ce qu'**une plateforme de levage (5) pour les passagers (P) est prévue dans la zone d'embarquement (E) **et en ce que** la plateforme de levage (5) est soulevée à une hauteur établie ou pouvant être établie en mode de fonctionnement de sécurité.

11. Procédé selon la revendication 9 ou 10, **caractérisé en ce qu'**au moins une caméra (10) est utilisée comme dispositif de détection, qui acquiert la zone d'embarquement (E) et une unité d'évaluation (11) est utilisée qui, à partir d'un certain nombre d'images acquises par l'au moins une caméra, détecte les passagers dans la zone d'embarquement (E) et détermine le type de passager pour chaque passager détecté, dans lequel la caméra (10) est de préférence une caméra 3D ou une caméra infrarouge et dans lequel un modèle de reconnaissance d'image est de préférence utilisé dans l'unité d'évaluation (11).

12. Procédé selon l'une des revendications 9 à 11, **caractérisé en ce qu'**au moins l'un des types de passager suivants est établi comme type de passager de sécurité pouvant être déterminé : passager en dessous d'une taille établie, passager au-dessus d'une taille établie, passager avec planche à neige, passager avec vélo à neige, passager avec fauteuil roulant, passager avec bobsleigh ou luge, passager avec monoski, passager avec vélo, passager avec bagage, passager avec jeune enfant, passager avec animal domestique, passager avec équipement de sauvetage, notamment barquette, passager avec déambulateur.

13. Procédé selon l'une des revendications 9 à 12, **caractérisé en ce qu'**au moins deux types de passager de sécurité différents sont établis, dans lequel un premier mode de fonctionnement de sécurité est établi pour un premier type de passager de sécurité et un second mode de fonctionnement de sécurité est établi pour un second type de passager de sécurité, différent du premier mode de fonctionnement de sécurité.

14. Procédé selon la revendication 13, **caractérisé en ce que,** pour le premier mode de fonctionnement de sécurité, une première hauteur de la plateforme de levage (5) est établie et, pour le second mode de fonctionnement de sécurité, une seconde hauteur de la plateforme de levage (5), différente de la première hauteur, est établie **et/ou en ce que,** pour le premier mode de fonctionnement de sécurité, une première vitesse de bande transporteuse de la bande transporteuse (7) est établie et, pour le second mode de fonctionnement de sécurité, une seconde vitesse de bande transporteuse de la bande transporteuse (7) est établie, différente de la première vitesse de bande transporteuse **et/ou en ce que,** pour le premier mode de fonctionnement de sécurité, une première vitesse de transport des véhicules de téléphérique (3) est établie et, pour le second mode de fonctionnement de sécurité, une seconde vitesse de transport des véhicules de téléphérique (3) différente de la première vitesse de transport est établie.

15. Procédé selon l'une des revendications 9 à 14, **caractérisé en ce qu'**une zone d'accès (Z) est prévue pour l'accès des passagers à la zone d'embarquement (E), dans lequel un dispositif de barrière (12) automatique est prévu entre la zone d'accès (Z) et la zone d'embarquement (E) qui libère de manière cyclique l'accès pour les passagers (P) à la zone d'embarquement (E) **et en ce que** le dispositif de détection détermine les types de passagers dans la zone du dispositif de barrière (12).

16. Procédé selon l'une des revendications 9 à 15, **caractérisé en ce que,** dans une seconde station de téléphérique (2b), une zone de débarquement (A) pour des passagers (P) est prévue pour le débarquement des véhicules de téléphérique (3) **et en ce que** l'unité de commande (6) fait fonctionner le téléphérique à mouvement continu (1) à un moment de débarquement, dans un mode de fonctionnement de sécurité établi, auquel moment un véhicule de téléphérique (3) avec un passager (P), pour lequel un type de passager de sécurité a été déterminé dans la première station de téléphérique (2a), se trouve dans la zone de débarquement (A), dans lequel pour chaque véhicule de téléphérique (3) un identifiant de véhicule unique est prévu et l'unité de commande (6) détermine le moment de débarquement de préférence à l'aide de l'identifiant de véhicule.
